(19) Europäisches Patentamt
European Patent Office
Office européen des brevets

(11) **EP 3 876 404 A1**

(12) **EUROPEAN PATENT APPLICATION**

(43) Date of publication:
**08.09.2021 Bulletin 2021/36**

(21) Application number: **20161436.9**

(22) Date of filing: **06.03.2020**

(51) Int Cl.:
**H02M 1/00** *(2006.01)*       **H02M 3/158** *(2006.01)*
**H02M 7/5387** *(2007.01)*     **H02M 7/48** *(2007.01)*
**H02M 1/44** *(2007.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **INESC TEC - Instituto de Engenharia de Sistemas e**
**Computadores, Tecnologia e Ciência**
**4200-465 Porto (PT)**

(72) Inventor: **Ramos, João Pedro Ayres Pereira da Cunha**
**4200-465 Porto (PT)**

(74) Representative: **Harrison, Robert John**
**Sonnenberg Harrison Partnerschaft mbB**
**Postfach 33 08 65**
**80068 München (DE)**

(54) **POWER CONVERTER**

(57)    A power converter and a method for converting an input electrical supply at a first voltage to an output electrical supply at a second voltage is disclosed. The power converter comprises a first pair of switching elements (115, 125) connected in series at a first common node (1) between a first supply line (1001) of an input electrical supply and a third node and a second pair of switching elements (415, 425) connected in series at a second common node (4) between a fourth node and a second supply line (1002) of the input electrical supply. An upper path is connected between the first common node (1) and the second common node (4), wherein the upper path comprises a first inductor (12) connected to one side of a first blocking capacitor (25) and a third inductor (54) connected to another side of the first blocking capacitor (25). A lower path is connected between the first common node (1) and the second common node (4), wherein the lower path comprises a second inductor (16) connected to one side of a second blocking capacitor (63) and a fourth inductor (34) connected to another side of the second blocking capacitor (63). The output comprises a first output terminal (2) connected to the one side of the first blocking capacitor (25) and a second output terminal (3) connected to the other side of the second blocking capacitor (63).

Fig. 2

**Description**

Field of Invention

The invention relates to a power converter and a method for operating the power converter.

Background to the Invention

Power converters are known in the art. One type of power converter is a switched-mode power supply (SMPS) which is an electronic power supply that incorporates a switching regulator to convert electrical power efficiently from AC to DC or from DC to DC at different voltages. In these SMPS, a pass transistor is switched between transistor full-on states and transistor full-off states, which are low dissipation. The pass transistor is kept in a low dissipation state and this enables the SMPS can achieve high power conversion efficiency.

The transition time in the pass transistor between the full-on states and full-off states is of very short duration but can be a high dissipation state and leads to energy losses termed "transistor switching losses". It is known that switching of the transistors in the SMPS at higher frequencies enables the use of smaller passive components, such as filter capacitors, inductors and transformers but higher switching frequencies increase the switching losses and limit the power conversion efficiency. It will therefore be appreciated that the switching losses in the SMPS are a design concern.

The SMPS comprise a power converter to convert the electrical power and a controller which operates the power converter. The converter has an input with an input voltage $V_{in}$ and an output with an output voltage $V_{out}$. The regulation of the output voltage $V_{out}$ or the output current $I_{out}$ in the SMPS is achieved by varying the ratio of the on-to-off time of the pass transistor. In fixed frequency converters, the fraction of on-time of the pass transistor in a switching period is known as duty-cycle.

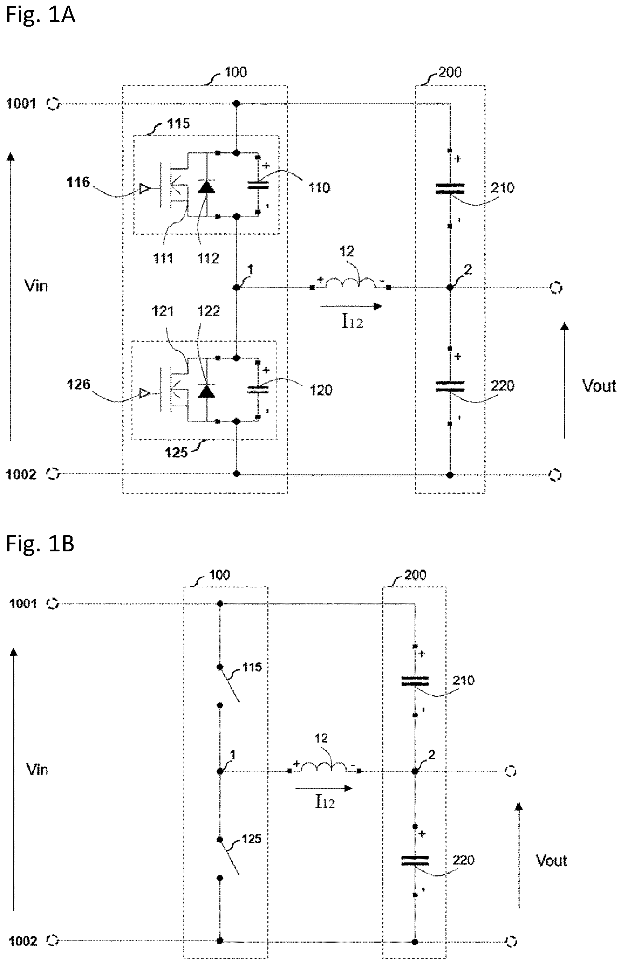

An example of the converter for a prior art SMPS is shown in Figs. 1A and 1B. The converter comprises two switching elements 115 and 125 (collectively shown in box 100), a main inductor 12 and two bypass capacitors 210 and 220 (shown in box 200). The switching elements 100 and the bypass capacitors 200 are connected between an upper supply line 1001 and a lower supply line 1002. The upper supply line 1001 is the positive terminal of the input voltage and the lower supply line 1002 is the negative terminal of the input voltage in this example.

It will be appreciated that the use of the terms "upper" and "lower" in this document refer only to the position of the elements on the figure and are not intended to be otherwise limiting of the location of the elements. The switching elements 115 and 125 have a common node 1 and the bypass capacitors 210 and 220 have a common node 2. An inductor 12 is connected between node 1 and node 2 and a current $I_{12}$ flows through the inductor 12. The output voltage $V_{out}$ is taken between the lower supply line 1002 and the node 2 (but could also be between the upper supply line 1001 and the node 2).

As is shown in Fig. 1A, the two switching elements 115 and 125 have arranged in parallel a field effect transistor (FET) 111 and 121 whose gates 116 and 126 are connected to the controller, a first diode 112 and a second diode 122 as well as a first capacitor 110 and a second capacitor 120.

As noted above, the regulation of the output voltage $V_{out}$ by switching between the full-on and full-off stages (modulation) of the switching elements 115 and 125 is carried out by chopping at high frequency. This is done by applying driver signals from the controller to the switching elements 115 and 125 and more particularly to the gates 116 and 126 of the FETs 111 and 121. The modulation of the driver signals can be, for example, a modulation such as pulse-width-modulation (PWM) with a rectangular wave with fixed frequency and varying on-time.

It will be appreciated that the controller needs to modulate the driver signals such that there is no simultaneous conduction of both the upper switching element 115 and the lower switching element 125 which will otherwise lead to a short-circuit between the upper supply line 1001 and the lower supply line 1002 through the device. The controller needs to arrange for a dead-time (or a transition period with both switching elements turned off) after the turn-off of one of switching elements 115 or 125 and before the turn-on of the complementary switching element.

The modulation scheme of the prior art circuit of Figs. 1A and 1B will now be described. The current flowing through the inductor 12 from the node 1 to the node 2 is given a value $I_{12}$. The voltage over the inductor 12 is given by $V_{12}$. The inductance value of inductor 12 is given by $L_{12}$. The voltage across the first bypass capacitor 210 is $V_{210}$ and the voltage across the second bypass capacitor 220 is $V_{220}$. The voltage polarities are shown in the Figs. 1A and 1B.

The switching element 115 with the FET 111 is turned on when the gate drive signal G111 at the FET 111 is enabled. When the FET 111 is in the on-state (i.e. conducting) or during free-wheeling through the diode 112, the voltage $V_{12}$ over the first inductor 12 is $V_{210}$ and the current $I_{12}$ increases as the first inductor 12 is energized according to the following equation:

$$\frac{d}{dt}I_{12} = \frac{V_{210}}{L_{12}} = \frac{V_{in} - V_{out}}{L_{12}}$$

The bottom switching element 125 with the FET 121 is turned on when the gate drive signal G121 is enabled. As above, when the FET 121 is in the on-state or during free-wheeling through the body diode 122, the voltage over the main inductor 12 is $-V_{220}$ and the current $I_{12}$ decreases as the inductor is de-energized according to

$$\frac{d}{dt}I_{12} = -\frac{V_{220}}{L_{12}} = -\frac{V_{out}}{L_{12}}$$

As is known, with pulse-width-modulation, the conduction is periodically alternated between the top switching device 115 and during a time period denoted by $t_{1TOP}$ and the bottom switching device 125 during a time period denoted by $t_{1BOT}$. The switching period $T_{sw}$ is defined as the inverse of the switching frequency $f_{sw}$ according to $T_{sw} = 1/f_{sw}$.

For steady or slowly changing output current and voltage, the oscillations within a switching period $T_{sw}$ can be averaged out and the ratio of conduction time through the top devices $t_{1TOP}^{*}$ to this switching period, or the top duty-cycle $d_{1TOP}^{*}$, is approximated by

$$d_{1TOP}^{*} = \frac{t_{1TOP}^{*}}{T_{sw}} = \frac{V_{220}}{V_{210} + V_{220}} = \frac{V_{out}}{V_{in}}$$

The true value of $d_{1TOP}$ is affected by diode freewheeling in the diodes of the circuit during dead-time and the values of resistance and inductance of the components in the power converter. The controller imposes $d_{1TOP}$ in order to compensate for these and other disturbances. When operating the SMPS as a current-controlled converter, a reference value of current $I_{ref}$ is imposed on inductor current $I_{12}$ with proportional control and selection of the duty-cycle according to

$$d_{1TOP} = \frac{V_{out} + K_p(I_{ref} - I_{12})}{V_{in}}$$

where $K_p$ is the proportional control gain. The proportional control gain is desired to be as large as possible to maximize the effectiveness of the current control and minimize the time constant $\tau_c$ of the current controller defined by $\tau_c = L_{12}/K_p$. This time constant $\tau_c$ must be at least a few switching cycles (here two). As such, the proportional control gain is limited by both the value of inductance $L_{12}$ and the switching frequency $f_{sw}$ according to

$$K_p = \frac{L_{12}}{\tau_c} \leq \frac{L_{12}f_{sw}}{2}$$

The complementary duty-cycle (of the bottom device) is naturally $d_{1BOT} = 1 - d_{1TOP}$.

As described above, the conduction is alternated between the top and bottom devices, and so the current $I_{12}$ rises and falls resulting in a current ripple with frequency equal to the switching frequency. The amplitude of the current ripple is given by

$$\Delta I_{12} = t_{1TOP}\frac{V_{12}}{L_{12}} = \frac{V_{in}\, d_{1TOP}\, (1 - d_{1TOP})}{L_{12}\, f_{sw}}$$

The SMPS of the prior art have a number of issues which need to be addressed. The chopping and current control cause electromagnetic interference (EMI) which must be contained to comply with EMI regulations, such as IEC-61000 or FCC part 15 B. These constraints often conflict with other design goals, such as high conversion efficiency and high-power density.

One solution to mitigate EMI comprises the use of filters in the converters which include passive devices (e.g.

capacitors and inductors). To reduce the volume and weight of these passive devices the switching (modulation) frequency of the power converter can be increased. This increase in the switching frequency may lead to increased transistor switching losses, as well as high thermal stress and reduced conversion efficiency and reliability. The transistor switching losses are mainly related to hard-switching, diode reverse recovery, loss of energy stored in parasitic capacitance and transient conduction through the pass transistor while the voltage of the pass transistor is still considerable (transitioning from the full-off high-voltage state to the full-on low-voltage state). These hard-switched transitions are also responsible for the EMI and introduce high rate of change of voltage, ringing and emissions in the radio frequency range (MHz).

There are prior art solutions known using a concept called "soft-switching" to overcome these issues. The soft-switching of the SMPS can be either zero-current switching (ZCS) or zero-voltage switching (ZVS) and the soft-switching mitigates the limitations of the hard-switching and enables the use of higher switching frequencies. With modern FETs, the inherent parallel parasitic capacitance of the FET helps to ensure ZCS turn-off and the duration of the turn-off transition and associated switching loss can be minimized by proper design of the gate driver circuit. The duration of turn-on transitions and related switching loss cannot be reduced in the same manner because doing so introduces issues with EMI and accidental turn-on of complementary transistors. Because of this, in optimized power converters using FETs as pass transistors, the majority of switching losses occur with the turn-on transitions and introduction of ZVS turn-on is desirable.

The soft-switching occurs naturally in some topologies, especially resonant converters and phase-shift dual-active-bridge (DAB) isolated converters. In non-isolated power converters, the soft-switching is enabled with added transistors and resonant circuits (which act as active snubbers) or through manipulation of control signals to achieve ripple relaxation. This is illustrated, for example, in the publications by C. P. Henze, H. C. Martin, and D. W. Parsley, "Zero-voltage switching in high frequency power converters using pulse width modulation," in APEC '88 ThirdAnnual IEEE AppliedPower Electronics Conference and Exposition, pp. 33-40, and C. Marxgut, J. Biela, and J. W. Kolar, "Interleaved Triangular Current Mode (TCM) resonant transition, single phase PFC rectifier with high efficiency and high power density," in The 2010 International Power Electronics Conference-ECCE ASIA, 2010, pp. 1725-1732.

These two publications describe use of triangular current mode (TCM) instead of PWM to ensure the soft-switching by ensuring sufficient current ripple to prevent the diode reverse recovery and the hard-switching. However, the TCM is achieved by letting the current ripple exceed the output current and this high-magnitude high-frequency current emission must be filtered out. This filtering out of the high-frequency current emission and the introduction of variable frequency (due to TCM) represents an additional challenge in the design of the EMI filter.

Commonly, EMI filters are composed of several LC low-pass filter stages in series. Each LC stage is comprised of capacitors with capacitance $C_f$ and inductors with inductance $L_f$ and has a natural resonance frequency given by

$$f_r = \frac{1}{2\pi\sqrt{L_f C_f}}$$

The filtering effect (or attenuation) of a LC stage at frequencies below its resonance frequency ($f \ll f_r$) is negligible. Above the resonance frequency ($f \gg f_r$) the attenuation increases with the square of frequency. Excitation of the LC stage at its resonance frequency ($f \approx f_r$) leads to augmentation of emissions instead of attenuation and to potential damages to the filter and connected equipment. To maximize attenuation and avoid resonance the filter resonant frequency $f_r$ should be well below the switching frequency and below the bandwidth of the current controller.

For the power converters operating at a higher switching frequency, the noise emissions fall deeper into the radio spectrum at which frequencies any emission limits are stricter. To achieve the required attenuation, multi-stage EMI filters are required and distributing the volume and cost budget over several filter stages results in smaller inductance and capacitance in each one of the filter stages and results in resonant frequencies that are closer to the switching frequency.

The introduction (with TCM) of high magnitude current ripple further increases the required attenuation. With the varying frequency of TCM the filters must be simultaneously designed to avoid resonance at the minimum switching frequency and at the same time ensure the strict attenuation for the maximum switching frequency. These constrains imply the use of large filters and/or damping of resonance which has implications on volume, cost and filter stability and is subject to limits of reactive current and filter losses. The application of the TCM to the design of a soft-switching converter is detailed in D. Bortis, D. Neumayr, and J. W. Kolar, "$\eta\rho$-Pareto optimization and comparative evaluation of inverter concepts considered for the GOOGLE Little Box Challenge" in 2016 IEEE 17th Workshop on Control and Modeling for Power Electronics (COMPEL), pp. 1-5, which also covers the best practices in this field.

To minimize overall losses with TCM, the current envelope is enlarged just enough to ensure soft-switching by a continuous selection of the switching frequency in accordance to the low-frequency current output. In order to achieve sufficient current ripple for TCM, an alternative to varying the switching frequency is to reduce the inductance value of the inductor closest to the switching elements. This reduction of the inductance, however, leads to permanent high-amplitude current ripple that results in also permanently high conduction losses and magnetic losses that degrade the conversion efficiency. Lastly, the reduction of either the switching frequency or the inductance limits the value of current control gains leading to degradation of control performance.

To address the EMI mitigation challenges, parallel interleaving has also been considered which doubles the number of active components, potentially reducing reliability and with only a modest effect on emissions attenuation. Alternatively, the integrated triangular current mode (iTCM) was considered in Rothmund, T. Guillod, D. Bortis, and J. W. Kolar, "99.1% Efficient 10 kV SiC-Based Medium-Voltage ZVS Bidirectional Single-Phase PFC AC/DC Stage," IEEE J. Emerg. Sel. Top. Power Electron., vol. 7, no. 2, pp. 779-797, Jun. 2019., which introduces internal resonant filters and contains the current ripple inside the converter reducing the external attenuation requirements of the EMI filter, but this still leads to constant losses leading to poor low-load efficiency.

The above considerations can be summarized as follows. The design of the power converters implies addressing current control, energy conversion losses (namely switching losses) and the limitation of current noise emissions. These factors often compete with each other, demanding compromises, and the prior art lacks a solution that conciliates these issues. There is a need for flexible soft-switching techniques that do not depend on frequency modulation or loss of controllability and that also avoid constant energy losses. These techniques should also encompass new internal filter solutions that aid in soft-switching without adding to current emissions and that simultaneously result in high attenuation.

Summary of the Invention

The present invention relates in general to electric power conversion, and more specifically a family of power converters (DC-DC, DC-AC or AC-AC) with high attenuation of switching frequency current emissions and operating with zero-voltage switching (ZVS) from a no-load to a full-load condition, with the ability to operate at fixed or varying frequency, thus minimizing conversion losses, output distortion and output filter requirements.

It is an object of the invention to provide a power converter that mitigates the limitations of prior art by exploiting topology symmetries and the degrees of freedom in the generation of pulse-width-modulation (PWM) control signals to achieve soft-switching operation with a controlled current envelope and contained current emissions and electromagnetic interference.

The soft-switching and the triangular current mode are achieved through magnetic integration and coupling of inductors in the circuit and by manipulation of the control signals applied to the gates of the transistors in the switching elements.

The filter inductors have balanced and matched voltage and are coupled to behave like a high-frequency transformer for internal reactive current circulation. It has been found that, for low-load-operation, the naturally occurring current ripple is sufficient to ensure the soft-switching. On the other hand, for higher values of load current, the switch operation between the switching elements is misaligned to increase internal reactive common-mode current circulation and enlarge the current envelope to ensure soft-switching by ZVS turn-on of all of the active devices.

Since the current shape is dictated by the alignment of the gate control signals and the leakage inductance of the coupled inductors alone, the magnetizing inductance can be set independently and kept high to ensure high values of current control gains and high controllability of output (differential-mode) current and better attenuation of differential-mode emissions.

The current shaping does not depend on frequency modulation and thus constant frequency can be maintained which simplifies the design of sampling and control tasks and thus PWM control signal can be used which simplifies the implementation of the modulation scheme. In addition, the constant frequency enables easier tuning and damping of the EMI filter.

The current envelope is controllable and thus the soft-switching is possible over the full operation range (from zero to full load) and the current envelope and internal reactive current can be kept small for low-output currents to minimize losses and improve low-load efficiency.

The modulation for low load operation is bipolar pulse-width-modulation which produces little to no common-mode emissions. Common-mode emissions occur with increased internal current circulation (to ensure soft-switching for high-output current) and must be filtered. For this, the converter comprises an internal filter for both differential-mode and common-mode emissions.

Brief Description of the Drawings

FIGS. 1A and 1B are a schematic of a prior art switching network with bypass capacitors
FIG. 2 is a schematic of a first embodiment of the converter in a DC-AC configuration

FIG. 3 is a schematic of the second embodiment of the converter in DC-DC configuration

FIG. 4 is a schematic showing the different inductor coupling options

FIG. 5 is a schematic of the third embodiment of the power converter which enables the use of legacy bipolar PWM inverters through retrofitting.

FIGS 6A-6C are timing diagrams which illustrates the operation of the disclosed power converter of FIG.2 or FIG.3 under different loading conditions and with high noise attenuation but without current shaping leading to progressive introduction of hard-switching operation

FIG 7A is a timing diagram which illustrates current shaping through the introduction of phase shift in the pulse-width-modulation

FIG 7B is a timing diagram which illustrates current shaping through the introduction of zero-sequence offset in the pulse-width-modulation.

FIG. 8 is a schematic of current flow through the converter of FIG 2.

FIG 9 is a timing diagram which illustrates the operation of the disclosed power converter of FIG.2 or FIG.3 under high-load and soft-switching ensured by current shaping.

Detailed Description of the Invention

The power converter described in this application has two components which can be used independently: an internal EMI filter and a method to achieve flexible current envelope through inductor coupling, bypass capacitors and a modulation scheme, as will be described below.

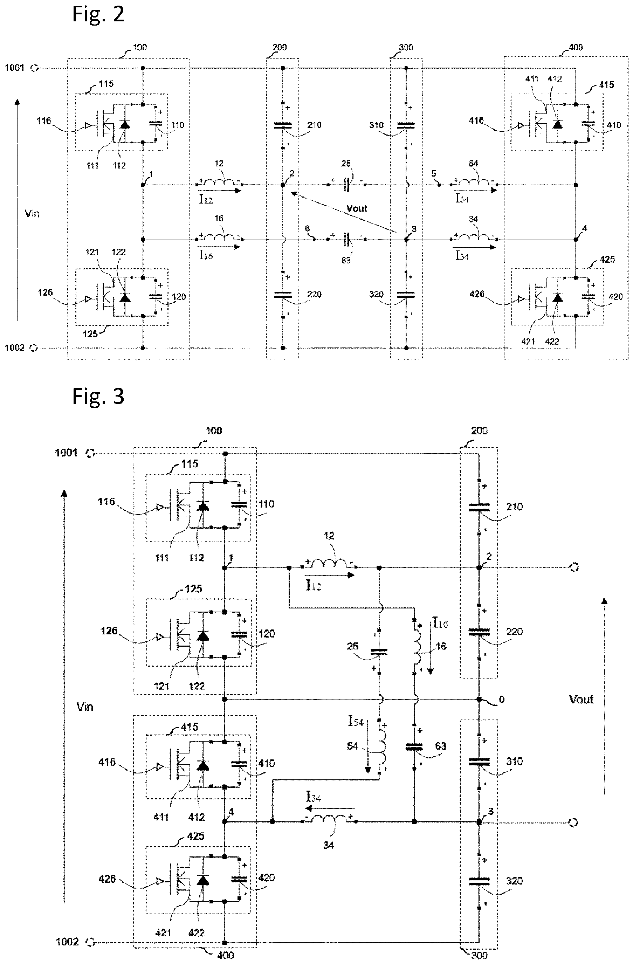

A first aspect of the invention is shown in Fig. 2 for AC to DC or for DC to AC power conversion. It will be seen that the circuit of Fig. 2 is substantially formed from two of the circuits shown in Fig. 1, together with some additional components. For the purpose of simplicity, similar reference numbers are used for the circuit shown on the left-hand side of Fig. 2 which matches the circuit of Fig. 1A. The terms "left-hand side" and "right-hand side" as well as "upper" or "lower" are only intended to indicate the position of the elements on the figures and not to have any significance physically or on the layout of the circuit.

Fig. 2 shows four switching elements 115, 125, 415, 425 with a design that is described in detail in connection with Fig. 1. It will be noted that the design of the switching elements 115, 125, 415, 425 is not intended to be limiting of the invention and can be changed without altering the scope of the invention. It will also be appreciated that the capacitors and diodes that comprise each switching element 115, 125, 415, 425 could be discrete elements but are more commonly part of an integrated circuit (e.g. the parasitic capacitance and the body-diode of a MOSFET).

Fig. 2 has a first bypass capacitor 210, a second bypass capacitor 220, a third bypass capacitor 310 and a fourth bypass capacitor 320 as well as a first inductor 12, a second inductors 16, a third inductor 54 and a fourth inductor 34 as well as two DC blocking capacitors 25 and 63. The first bypass capacitor 210 and the second bypass capacitor 220 are connected in series commonly at a node 2 between the upper supply line 1001 and the lower supply line 1002. Similarly, the third bypass capacitor 310 and the fourth bypass capacitor 320 are connected commonly at a node 3 between the upper supply line 1001 and the lower supply line 1002.

As can be seen in Fig. 2, there are two paths between the nodes 1 and 4. The first upper path passes through node 2 and is connected to the node 2 (between the bypass capacitors 210 and 220) and the second lower path passes through node 3 and is connected to the node 3 (between the bypass capacitors 310 and 320). The first inductor 12 and the third inductor 54 are located in the upper path with the first DC blocking capacitor 25 located between the first inductor 12 and the third inductor 54. The second inductor 16 and the fourth inductor 34 are located in the lower path with the second DC blocking capacitor 63 located between the second inductor 16 and the fourth inductor 34. The first inductor 12 and the fourth inductor 34 are the main filter inductors. The second inductor 16 and the third inductors 54 are the internal filter inductors.

The main power output with an output voltage $V_{out}$ is between the nodes 2 and 3.

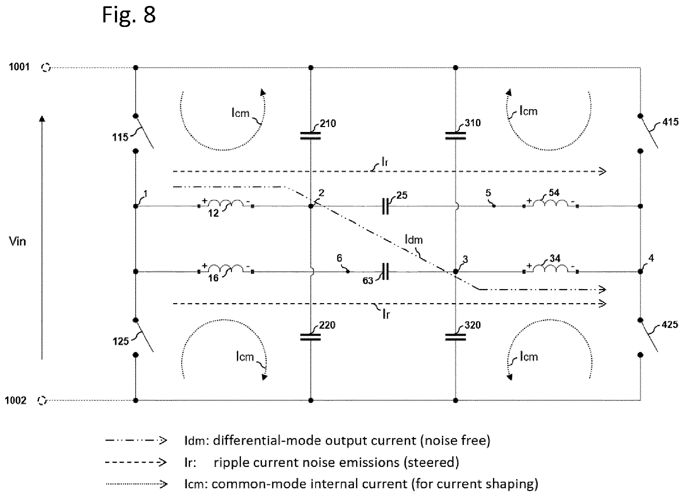

The pair of inductors formed from the second inductor 16 and the third inductor 54 replicate the differential-mode current ripple and circulate the current ripple internally through the DC blocking capacitors 63 and 25, as shown in Fig. 8, and thus steer the differential-mode ripple current away from the output (between nodes 2 and 3) and thus form an internal filter. The values of the inductance of all of the inductors 12, 16, 34 and 54 are substantially the same in order to enable current ripple steering and minimize noise emissions. The value of the inductance of the second inductor 16 and the third inductor 54 (i.e. the internal filter inductors) matches the value of main filter inductance formed from the first inductor 12 and the fourth inductor 34 in order to replicate the current ripple.

These inductors 16 and 54 and the DC blocking capacitors 63 and 25 form resonant pairs but the internal filter is more than just a resonant filter. The internal filter is actually not resonating at its natural frequency (same as corner frequency) but mimics the current ripple on the main inductors, i.e. the first inductor 12 and the fourth inductor 34. The effect of the internal filter is to provide (up to) 40dB attenuation of the current ripple due to the switching frequency.

The value of the two DC blocking capacitors 63 and 25 will generally be substantially the same, but this is not limiting of the invention. The DC blocking capacitors 63 and 25 need to be selected to avoid any large voltage variation due to the passing ripple, as well as avoiding resonance with the current controller or the switching frequency. This is achieved by selecting the value of the DC blocking capacitors such that the corner frequency of the resonant LC circuit is substantially lower (e.g. a non-limiting value of 5-10x) than the value of the switching frequency $f_{sw}$. A reference value for the DC blocking capacitors can be derived from $\sqrt{LC} > 1/f_{sw} = T_{sw}$.

The introduction of the filter pairs with the inductors 12, 16, 34 and 54 with the DC blocking capacitors 25 and 63 doubles the amount of current ripple circulating through the active devices. This effect doubles the natural soft-switching range of the converter without the need for manipulation of the control signals on the switching elements 115, 125, 415, 425. At the same time the additional filter pair of inductors cancel the majority of differential-mode emissions.

The low-frequency (i.e. power carrying) output current flows through the main filter inductance (formed from the first inductor 12 and the fourth inductor 34) and not through the internal filter inductance (formed from the second inductor 16 and the third inductor 54). The second inductor 16 and the third inductor 54 are therefore less subject to saturation of their magnetic cores and can be designed to be smaller, lighter and cheaper.

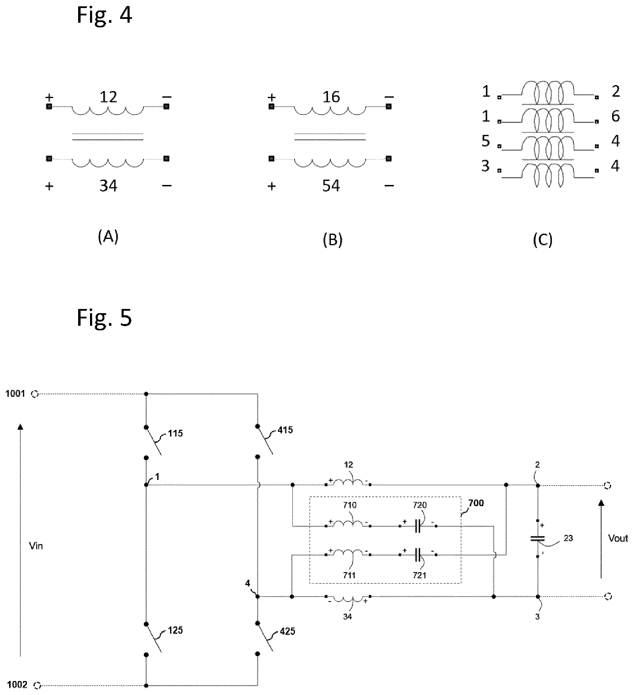

In one aspect of the circuit, the main filter inductors (12 with 34) and/or the internal filter inductors (16 with 54) are coupled and have a common core. This is shown in Fig. 4. There could be a common core for one or both pairs of the inductors (12 with 34 and/or 16 with 54), as shown on Fig. 4A and 4B or a single core for all of the inductors 12, 16, 34 and 54 as shown in Fig. 4C. This is required for the operation with the triangular current mode for high output loads. The coupling of the inductors is possible because similar voltage is applied over all of the inductors 12, 16, 34 and 54. Other coupling options are possible (i.e. the inductors 12 with 54 or 16 with 34) that also enable the method but there are less practical and reduce the effectiveness of the internal filter.

The coupling of the main filter inductors (12 with 34 as seen in Fig.4A) and/or the internal filter inductors (16 with 54 as seen in Fig.4B) doubles the effective value of differential-mode inductance and this coupling improves core utilization. Using a single shared common core among all of the four inductors 12, 34, 16 and 54 instead effectively quadruples the amount of differential-mode inductance for each of the four inductors 12, 34, 16 and 54.

It will be appreciated that the coupling of the inductors 12, 16, 34 and 54 in pairs or full magnetic integration in a single shared common core can also be used for volume reduction of the converter instead of inductance maximization. Another benefit of full magnetic integration is that it becomes easier to ensure tightly matched values of inductance for the inductors 12, 16, 34 and 54, given that all of the windings of inductors 12, 16, 34 and 54 have the same number of turns.

The first bypass capacitors 210, the second bypass capacitor 220, the third bypass capacitor 310 and the fourth bypass capacitor 320 together with the main filter inductance (formed from the first inductor 12 and the fourth inductor 34) form a second order filter which filters the remaining emissions (and provides additional 40dB/dec attenuation with frequency). The bypass capacitors 210, 220, 310 and 320 are responsible for the circulation of common-mode reactive current and the current shaping that enables soft-switching for example by triangular current mode operation.

The filter attenuation at the switching frequency can be tuned by selection of the value of the bypass capacitors 210, 220, 310 and 320. Because the bypass capacitors 210, 220, 310 and 320 are connected between the upper supply line 1001 and the lower supply line 1002 (i.e. between the positive and negative DC bus terminals) and not to earth, the values of the bypass capacitors 210, 220, 310 and 320 are not limited to small capacitance values or bound by low-frequency residual current limits and a high attenuation is possible. If the value of the first bypass capacitor 210 and the third bypass capacitor 310 are substantially the same and if the value of the second bypass capacitor 220 and the fourth bypass capacitor 320 are substantially the same, the design is balanced, and the internal low-frequency reactive current is minimized. In practice, the value of the first bypass capacitor 210, the second bypass capacitor 220, the third bypass capacitor 310 and the fourth bypass capacitor 320 are chosen to be substantially the same.

Since the magnetic fields of differential-mode currents circulating in the common core have opposing directions and the magnetic fields therefore (substantially) cancel each other out in the core of common-mode chokes, the common-mode chokes need not be designed to withstand the saturation flux of the (differential-mode) output current and can be easily designed for high inductance. A common-mode filter choke can be added between nodes 2 and 3 and the output to further increase EMI attenuation and ensure EMI test compliance. The leakage inductance of the added common-mode filter choke together with a differential-mode bypass capacitor across the output is often sufficient to ensure an additional stage of differential-mode attenuation as well.

A second embodiment of the invention is shown in Fig. 3 which represents a DC to DC power converter. Similar numbered elements in Fig. 3 correspond to identical elements in Fig. 2. The output voltage $V_{out}$ in this case is also between the nodes 2 and 3, as shown by the labelling $V_{out}$. It will be seen, however, that the first switching element 115 and the second switching element 125, the third switching elements 415 and the fourth switching element 425 are arranged in series with each other. Similarly, the first bypass capacitor 210, the second bypass capacitor 220, the third bypass capacitor 310 and the fourth bypass capacitor 320 are arranged in series with each other.

A third embodiment of the invention is shown in Fig. 5 which illustrates the addition of a filter 700 of the power converter to legacy systems. The legacy system comprises the four switching elements 115, 125, 415, 425, the main filter inductors 12, 34 and a differential-mode filter capacitor 23 and can be understood in connection with Fig. 2. In this embodiment the common node 1 of the first pair of the switching elements 115 and 125 is connected through the first inductor 12 to a first terminal 2 of the output supply voltage $V_{out}$ and a second terminal 3 of the output supply voltage $V_{out}$ is connected through the second inductor 34 to the common node 4 between the second pair of the switching elements 415 and 425. A bypass capacitor 23 is placed between the first terminal 2 and the second terminal 3 of the output supply voltage $V_{out}$. The capacitor 23 represents the usual implementation of differential-mode filter capacitance in legacy systems but a combination of bypass capacitors connected to the upper supply line 1001 or the bottom supply line 1002 is also possible, such as capacitors 210, 220, 310, 320 depicted in Fig. 2. The filter 700 comprises two filter paths with inductors 710 and 711 and DC blocking capacitors 720 and 721 connected in series with each other.

As can be understood by reference to the embodiments shown in Figs. 2 and 3, the two filter paths of the filter 700 are connected between the common nodes 1 or 4 of one of the pair of switching elements 115/125 or 415/425 and the ones of the terminals 2, 3 of the output supply voltage $V_{out}$. In other words, the top filter path comprising the inductor 710 and the capacitor 720 is connected to the first common node 1 of the first switching element 115 and the second switching element 125 and then to the second terminal 3 of the output supply voltage $V_{out}$. Similarly, the bottom filter path comprising the inductor 711 and the capacitor 721 is connected to the second common node 4 between the third switching element 415 and the fourth switching element 425 and the first terminal 2 of the output supply voltage $V_{out}$. The addition of the filter 700 enables the cancelation of differential-mode current ripple provided that the inductance values of inductors 12, 34, 710, 711 are substantially the same. If bypass capacitors are present in the legacy system (connected from the output nodes 2, 3 to earth or preferably to either the upper supply line 1001 or lower supply line 1002) and if it possible to manipulate the gate driver signals of the legacy system, the inductors 710 and 711 can be coupled with their windings around a common core to perform the role of the coupled internal filter inductors 16 and 54 of the embodiments of Figs. 2 or 3 and enable the full extent of the invention.

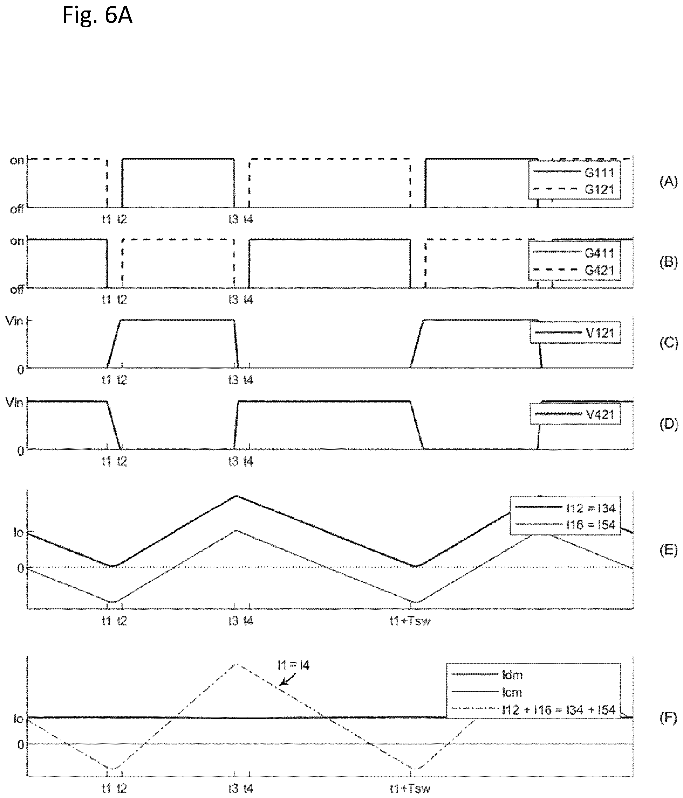

The operation of the embodiments of Figs. 2 and 3 at different levels of output load will now be explained with reference to the timing diagrams of Fig. 6A-6C. The signal G111 indicates the control signal applied to the gate of the first FET 111 in the first switching element 115. The signal G121 indicates the control signal applied to the second FET 121 of the second switching element 125. The signal G411 indicates the control signal applied to the third FET 411 of the third switching element 415. The signal G421 indicates the control signal applied to the fourth FET 421 of the fourth switching element 425. The control signals G111 and G121 are shown in line (A) and the signal G411 and G421 are shown in line (B). Line (C) shows the voltage V121 across the second FET 121 and line (D) shows the voltage across the fourth FET 421. It can be seen that in Fig. 6A-6C the control signals G111 and G421 are aligned and the control signals G121 and G411 are aligned with each other, illustrating the operation with state-of-art PWM.

The current $I_{12}$ flowing through the first inductor 12, the current $I_{16}$ flowing through the second inductor 16, the current $I_{54}$ flowing through the third inductor 54 and the current $I_{34}$ flowing through the fourth inductor 34 are given in line (E).

In the example shown in Fig. 6A for low loads, the control signals shown in lines (A) and (B) are aligned (called bipolar PWM). The operation of the power converter in this case is symmetric and the voltage V210 of the first bypass capacitors 210 and the voltage V320 of the fourth bypass capacitor 320 are substantially the same and the voltage V220 of the second bypass capacitor 220 and the voltage V310 of the third bypass capacitor 310 are substantially the same.

It is also known that, for equal values of the inductor voltages and the inductance values, the current $I_{12}$ through the first inductor 12 is the same as that current $I_{34}$ flowing through the fourth inductor 34 and the current $I_{16}$ flowing through the second inductor 16 is the same as that current $I_{54}$ flowing through the third inductor 54. Moreover, all of the inductor currents $I_{12}, I_{16}, I_{56}, I_{34}$ have substantially the same high-frequency components.

The current $I_2$ that flows from the power converter into node 2 is given by

$$I_2 = I_{12} - I_{54}$$

The current $I_3$ that flows from the converter into node 3 is similarly given by

$$I_3 = I_{16} - I_{34}$$

The currents $I_2$ and $I_3$ will have a substantially constant value (within a switching period) since the high frequency components cancel out in pairs (are said to be steered internally).

It is known that the electromagnetic interference (EMI) emissions spectrum of the power converter can be analyzed for differential-mode emissions and common-mode emissions. The differential-mode current $I_{dm}$ flowing through the output, exiting at the node 2 and returning to the node 3, averages to a substantially constant value and is shown as a thick line in line (F) and is given by

$$I_{dm} = \frac{I_2 - I_3}{2} = \frac{I_{12} - I_{54} + I_{34} - I_{16}}{2}$$

The common-mode current $I_{cm}$ is substantially zero and is shown in line (F) of Fig. 6A-6C along the zero-value line of the y-axis and is given by

$$I_{cm} = \frac{I_2 + I_3}{2} = \frac{I_{12} - I_{54} - I_{34} + I_{16}}{2}$$

The differential-mode current $I_{dm}$ and the common-mode current $I_{cm}$ have little or no ripple resulting in an emission spectrum with minimal high-frequency content and in minimal EMI.

The current $I_1$ at node 1 is given by

$$I_1 = I_{12} + I_{16}$$

This sum is, in this case, substantially the same as the current $I_4$ at node 4 given by

$$I_4 = I_{34} + I_{54}$$

The current $I_1$ at the node 1 and the current $I_4$ at the node 4 have double the number of components at high frequency as can be seen by the dotted line in line (F). As is known, this leads to a wider amplitude of current ripple and allows the power converter to operate under triangular current mode (TCM) and with soft-switching under larger values of output current.

Before time t1, the control signals G121 and G411 are enabled (on). A current is therefore flowing through the second FET 121 (lower left) and the third FET 411 (upper right).

At time t1, the control signals G121 and G411 are lowered to the off state and current can no longer flow through the FETs 121 and 411. Between times t1 and t2, all of the control signals G111, G121, G411 and G421 are low and thus all of the FETs 111, 121, 411 and 421 are switched off. This is dead time and is termed a "free-wheeling period". The current flows through the capacitors 110, 120, 410 and 420 and then through the diodes 112 and 422. The capacitors 110 and 420 will be discharged whereas the capacitors 120 and 410 will be charged up.

Immediately after time t1, the current $I_1$ at node 1 is negative (as seen in line (F)) and is flowing from the circuit on the right-hand side of Fig. 2 to the circuit on the left-hand side. The current $I_1$ cannot flow through diode 122 and the current $I_1$ flows therefore through the capacitors 110, 120. A transition occurs in which the voltage across the FET 121 rises to the input voltage $V_{in}$ from 0 and is shown in line (C). As would be expected, the current $I_4$ is also negative and flows through capacitors 410, 420 and the voltage across the second FET 421 falls in the same time from $V_{in}$ to 0 (see line (D)). Since the currents flow through the capacitors 110, 120, 410, 420 and not through the FETs 111, 121, 411, 421, this is called a ZCS turn-off transition and the switching energy loss is minimized.

After a short transition time, the capacitors 120, 410 will be completely charged (to $V_{in}$) and the capacitors 110, 420 will completely discharged (to 0 V) and the voltage across the diodes 112, 422 becomes substantially zero and the current will start to flow through the diodes 112, 422. The voltage across FETs 111 and 421 becomes also substantially zero.

At time t2, the control signals G111 and G421 of the second FET 111 and the third FET 421 are switched on. The current starts flowing through the FETs 111 and 421. Since the voltage of the FETs 111, 421 was already substantially zero, no voltage transition occurs, and this is called a ZVS turn-on transition and the switching energy loss is minimized.

Between the times t2 and t3, the voltage across the inductors 12, 16, 34, 54 is substantially the same and takes a positive value. The currents $I_{12}$, $I_{16}$, $I_{34}$, $I_{54}$ increase at a substantially equal rate as seen in line (E).

At time t3, the control signals G111 and G421 are lowered to the off state and the second FET 111 and the third FET 421 are turned off. The currents $I_1$ at node 1 and current $I_4$ at node 4 have become positive and have reached their peak value. In this case, the current flows from the circuit on the left-hand side to the circuit on the right-hand side. Immediately after time t3, the current can no longer flow through the FETs 111, 421 and flows through the capacitors 110, 120, 410, 420. The capacitors 110 and 420 will be charged up whereas the capacitors 120 and 410 will be discharged. After a voltage transition, the voltage across the diodes 122, 412 become substantially zero and current will start to flow through the diodes 122, 412. This is also a zero-current-switched transition (ZCS) as at time t1. It will be noted that the maximum value (amplitude) of the positive current at time t3 is larger than the maximum value (amplitude) of the negative current at time t1. As a result, the transition is much faster. The voltage across FETs 121 and 411 becomes also substantially zero.

At time t4, the control signals G121 and G411 are raised to the on state and the FETs 121 and 411 are switched on. A current now starts flowing through the FETs 121 and 411. Since the voltage of the FETs 121, 411 was already substantially zero, this is also a ZVS turn-on transition.

Between time t4 and the start of a new period at t1+Tsw, the voltage across the inductors 12, 16, 34, 54 is substantially the same and assumes a negative value. The currents $I_{12}$, $I_{16}$, $I_{34}$, $I_{54}$ decrease at a substantially equal rate and the cycle resumes.

The operation with soft-switched transitions is only possible for a limited range of output current. To achieve the ZVS turn-on transition at times t2 (or t4), the average value of currents $I_1$, $I_4$ during the dead time between the times t1 and t2 (or between the times t3 and t4) must be sufficiently negative (or positive) to ensure the full charge and discharge of the capacitors 110, 120, 410, 420 before the end of the dead time. For a dead time of small duration and for a triangular current ripple, the condition for the soft-switching operation can be approximated by

$$|I_o| < \frac{\Delta I}{2} - \frac{2\, Q_{oss}}{\Delta t}$$

where $|I_o|$ is the absolute value of instantaneous output current, $\Delta I$ is the magnitude of the triangular current ripple, $Q_{oss}$ is the charge in each capacitor 110, 120, 410, 420 (assumed equal) and $\Delta t$ is the duration of dead time. It is noted that this operation is possible for low values of output current Io or for high values of current ripple $\Delta I$.

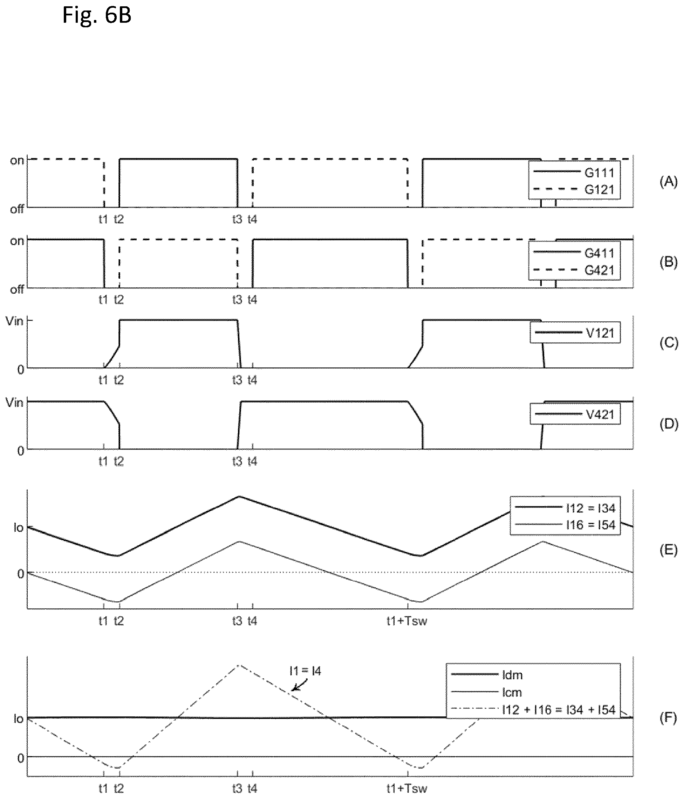

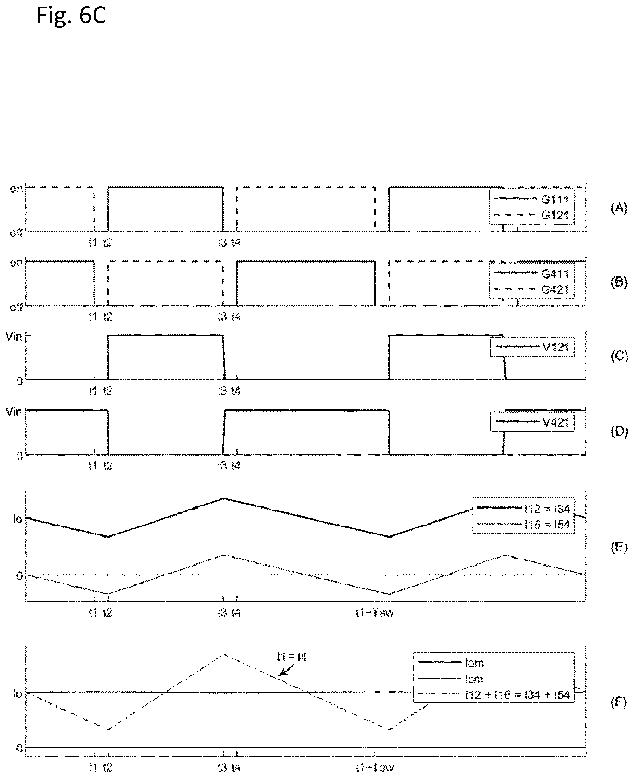

The impact of the value of output current in switching behavior will now be described in conjunction with Figs. 6B and 6C (high load, i.e. hard switching) and by comparison to Fig. 6A with a low load and soft-switching. Figs. 6B and 6C represent undesired operation modes of the embodiment of Fig. 2 and should be avoided.

In the case of Fig. 6A, the voltage transitions occur in the dead times and before the turn-on transitions at time t2 and t4. There is no voltage change at the times t2 and t4. The zero-voltage turn-on transitions at the time t2 and t4 are soft-switched and minimal switching loss incurs.

In the case of Fig. 6B with a medium load, the magnitude of output current is larger and the currents $I_1$ and $I_4$ between the time t1 and t2 are still negative (as can be seen in line (F) of Fig 6B) but not sufficient to ensure a full voltage transition before the turn-on at time t2 (as can be seen in lines (C) and (D) in Fig. 6B). The transition at the time t2 is no longer soft-switched and the remaining energy in the capacitors 110, 120, 410, 420 is lost as switching loss. However, none of the diodes 112, 122, 412, 422 are conducting at the time t2 and so no reverse recovery occurs.

In the case of Fig. 6C, the magnitude of the output current is even larger due to a larger load and the currents $I_1$, $I_4$ between t1 and t2 are now always positive and never reverse direction (as can be seen in line (F) of Fig. 6C). The positive current flows from the circuit on the left-hand side to the circuit on the right-hand side and, at the time t1, stops flowing through the FETs 121, 411 and starts freewheeling through diodes 122 and 412 in parallel with the FETs 121, 411. During the dead time between t1 and t2, the switching elements 125, 415 are still conducting and no voltage transition occurs (see Fig. 6C lines (C) and (D)) and no energy is recovered from the capacitors 110, 120, 410, 420. The energy stored in the capacitors 110, 120, 410, 420 is lost at the time t2 with an abrupt voltage transition. Moreover, since the diodes 122 and 412 are still conducting at the time t2, reverse recovery of these diodes 122 and 412 occurs at the time t2 with increased switching loss.

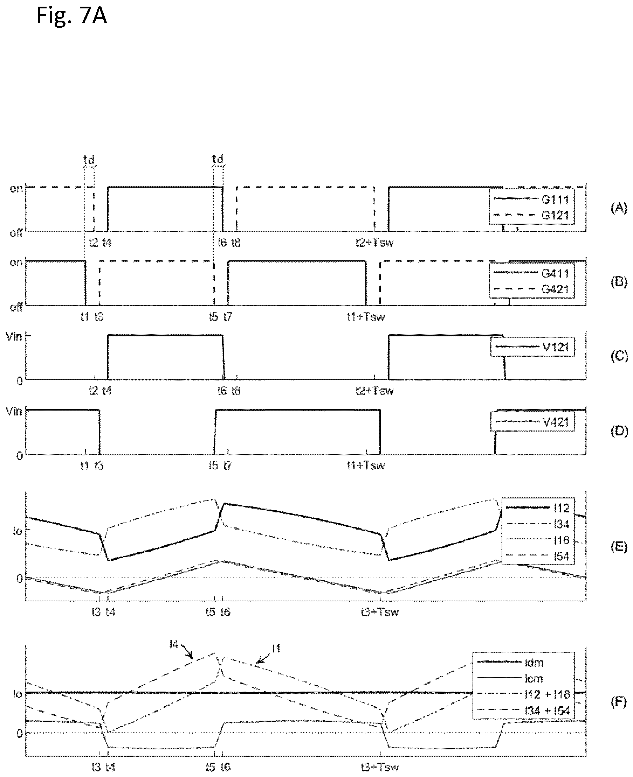

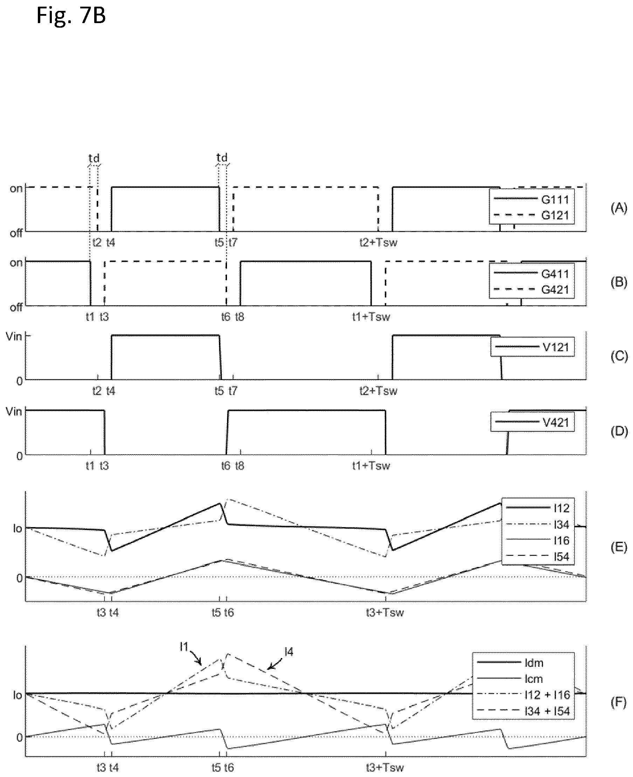

The introduction of current shaping will now be explained in conjunction with Figs. 7A and 7B. The purpose of current shaping is to enable zero-voltage transitions and is for operation at a high output load with reduced switching losses. The current shaping is achieved by misalignment of the gate control signals and introduction of common-mode currents as will now be explained.

As noted before, the coupling of one or more pairs of the inductors is one aspect of the invention and is essential for current shaping. The timing diagrams of Figs. 7A and 7B reflect the operation of the embodiment of Fig. 2 with the inductors 12 and 34 coupled and wound around a common core as seen in Fig. 4A. The coupling of the inductors 12 and 34 means that the predominant effect of current shaping will be the change of the shape of the currents $I_{12}$ and $I_{34}$ in the inductors 12 and 34. Different choices of coupling result in the change of the shape of current in the other inductors. All of the four coupling options result in the shaping of currents $I_1$ (=$I_{12}$+$I_{16}$) and $I_4$ (=$I_{34}$+$I_{54}$) at nodes 1 and 4 and are adequate to enable zero-voltage transitions with proper operation.

In practice, the power converters using fixed frequency PWM modify their gate control signals by changing the duty-cycle (i.e. the fraction of on-time in a switching period) or the phase-shift (the alignment of different pairs of the gate control signals). The differential of the duty cycles (between the left-hand side switching network 100 and the right-hand side switching network 400) is imposed by the output current/voltage controller but it is still possible to change both of the duty-cycles by an equal amount (termed the modulation zero-sequence) with no effect on their differential. Changes in either the phase-shift or in the modulation zero-sequence produce current shaping as will be described and illustrated with Figs. 7A and 7B in comparison with Fig. 6A-6C.

In the case of Fig. 6A and the low load operation described previously, the voltages V12 and V34 applied to inductors 12 and 34 are substantially the same. The coupled inductors 12 and 34 behave like a high-frequency transformer making it possible to transfer high-frequency currents from one winding to the other winding. However, there is no difference between the voltages applied to the two windings of the coupled inductors 12/34 and no current transfer occurs. The currents $I_{12}$ and $I_{34}$ flowing through inductors 12 and 34 are substantially the same. Another way of understanding the behavior of the coupled inductors 12/34 is through the analysis of the common-mode voltage and current emissions. In the case of Fig. 6A the change in voltage of switching nodes 1 and 4 are symmetric (see Fig. 6A lines (C) and (D)) and the average of the voltages V121 and V411 (termed the common-mode voltage) is constant and equal to Vin/2 and there are no common-mode current emissions (see Fig. 6A line (F)).

In the case of the aspect of the invention shown in Fig. 7A, the current shaping is achieved with the introduction of phase-shift as can be seen in lines (A) and (B) of this Fig. 7A. A time difference td is introduced between the control signals G111 and G121 of the first FET 111 and the second FET 121 and the control signals G411 and G421 of the third FET 411 and the fourth FET 421. In other words, the switching instants t2, t4, t6 and t8 of the control signals G111 and G121 are delayed in respect to the switching instants t1, t3, t5 and t7 of the control signals G411 and G421 (see Fig. 7A lines (A) and (B)) by a common short time delay (a small fraction of the switching period) given by

$$t_d = t_2 - t_1 = t_4 - t_3 = t_6 - t_5 = t_8 - t_7$$

Because the change in the voltages V121 and V411 is no longer complementary and aligned (see Fig. 7A lines (C) and (D)), the common-mode voltage is no longer always constant. Between t3 and t4, voltages V121 and V411 are both zero and the common-mode voltage is also zero and the change in common-mode voltage is -Vin/2 causing a decrease in common-mode current $I_{cm}$ as seen in line (F). Between t5 and t6, voltages V121 and V411 are both equal to the input voltage Vin and the common-mode voltage is also Vin and the change in common-mode voltage is +Vin/2, causing an increase in common-mode current Icm as also seen in line (F). This results in a common-mode current $I_{cm}$ that is trapezoidal in shape (see line (F)) and that is added to current $I_{12}$ and subtracted from current $I_{34}$ (see line (E)). The coupled inductors 12/34 behave as a high-frequency transformer and current is transferred from one winding to the other.

In the case of Fig. 7B, the current shaping is achieved with a variation of equal value of the duty-cycles in the first FET 111 and the third FET 411 (termed offset of the modulation zero-sequence). This is equivalent to the introduction of a delay between the switching instants t2 and t4 of the control signals G111 and G121 and the switching instants t1 and t3 of the control signals G411 and G421 as well as the introduction of an advance of switching instants t5 and t7 of the control signals G111 and G121 over the switching instants t6 and t8 of the control signals G411 and G421 with an equal time difference (see Fig. 7B lines (A) and (B)). Between the times t3 and t4 and between the times t5 and t6, the voltages V121 and V411 are both zero and the common-mode voltage is also zero. The change in the common-mode voltage is -Vin/2 causing a decrease in common-mode current $I_{cm}$, as seen in line (F). Because the bypass capacitors 210, 220, 310, 320 block the average value of common-mode voltage and current emissions, the common-mode current $I_{cm}$ recovers slowly over the entire switching cycle to assume an average value of zero. This results in a common-mode current $I_{cm}$ that is saw-tooth in shape (see line (F)) and that is added to the current $I_{12}$ and subtracted from the current $I_{34}$ (see line (E)). Again, the coupled inductors 12/34 behave as a high-frequency transformer and the current is transferred from one winding to the other.

It will be appreciated that the amount of the current shaping shown in Figs. 7A and 7B is selected for best illustration of the figures and is not sufficient to ensure zero-voltage transitions. The zero-voltage transitions are ensured by introducing a sufficiently large amount of either phase-shift (as in Fig. 7A) or zero-sequence offset (as in Fig. 7B) individually or a combination of both in any arbitrary ratio. Using only the phase-shift introduces large amounts of common-mode emissions with high harmonic content (due to a shape that is close to rectangular) and leads to a large increase in conduction losses (at least doubling). Conversely, using only the zero-sequence offset is very inefficient and may limit the modulation index of the power converter (or the maximum output voltage possible for a given input voltage). The amount of the current shaping can be selected to optimize the behavior of different aspects of the power converter.

The current flowing through the power converter is separated into differential-mode output current ($I_{dm}$), steered ripple emissions (Ir) and common-mode internal current ($I_{cm}$). The circulation path of these three distinct current modes will now be described in conjunction with Fig. 8.

The differential-mode output current $I_{dm}$ is responsible for the delivery of active and reactive power to the output and flows through any output connected devices, has a low-frequency and is void of most high-frequency noise emissions. The output current flows from node 1, through the inductor 12 and exits the converter at node 2 before returning to the converter at node 3 and flowing through inductor 34 to node 4. This is shown by the double dot dash line in Fig. 8.

The current ripple noise emissions $I_r$ (also differential-mode but steered from the output) are high-frequency and the current flow is shown as a dashed line from the node 1 of the circuit on the left-hand side of Fig. 8 to the node 4 of the circuit on the right-hand side of Fig. 8. The differential-mode noise emissions are split into equal values of current in the upper path (comprised of inductors 12 and 54 and the DC blocking capacitor 25) and in the lower path (comprised of inductors 16 and 64 and the DC blocking capacitor 63). Since these differential-mode high-frequency emissions do not flow through the output (between nodes 2 and 3) and are steered internally (for the most part) through the resonant pairs as described before these differential-mode high-frequency emissions do not contribute to electromagnetic interference.

The common-mode noise emissions are shown as dotted lines on Fig. 8 and are high-frequency and flow from the switching nodes 1 and 4 to the output nodes 2 and 3. The common-mode noise emissions are split into equal values of current flowing from the circuits on the left-hand and right-hand side of Fig. 8 to the bypass capacitors 200, 300 and circulate in short loops and do not flow through the input or the output.

When the switching element 115 is active, the common-mode emissions in the left-hand side of Fig. 8 originate from the upper supply line 1001 and flow through the switching element 115 and the inductor 12 and capacitor 210 and through the switching element 115 and the inductor 16 and capacitors 63 and 310 and back to the upper supply line 1001. When the switching element 125 is active, the common-mode emissions in the left-hand side of Fig. 8 originate from the lower supply line 1002 and flow through the switching element 125 and the inductor 12 and capacitor 220 and through the switching element 125 and the inductor 16 and capacitors 63 and 320. When the switching element 415 is active, the common-mode emissions in the right-hand side of Fig. 8 originate from the upper supply line 1001 and flow through the switching element 415 and the inductor 34 and capacitor 310 and through the switching element 415 and the inductor 54 and capacitors 25 and 210 and back to the upper supply line 1001. When the switching element 425 is active, the common-mode emissions in the right-hand side of Fig. 8 originate from the lower supply line 1002 and flow through the switching element 425, the inductor 34 and the capacitor 320 and through the switching element 425, the inductor 54 and the capacitors 25 and 220.

The common-mode currents $I_{cm}$ can only flow through the output if a low impedance path (either due to the presence of a parasitic or of a fault) exists between one of the output nodes 2, 3 and one of the upper supply line 1001 or the lower supply line 1002. The common-mode currents flow through the individual inductors according to their common-mode impedance (the lower the impedance the higher the current). When the inductors are coupled together, as illustrated in Fig. 4, their differential-mode inductance increases, and their common-mode inductance decreases, and the majority of common-mode current will flow through the coupled inductors. If no inductors are coupled or if all inductors are coupled together the common-mode currents will be split equally over all inductors 12, 16, 34 and 54.

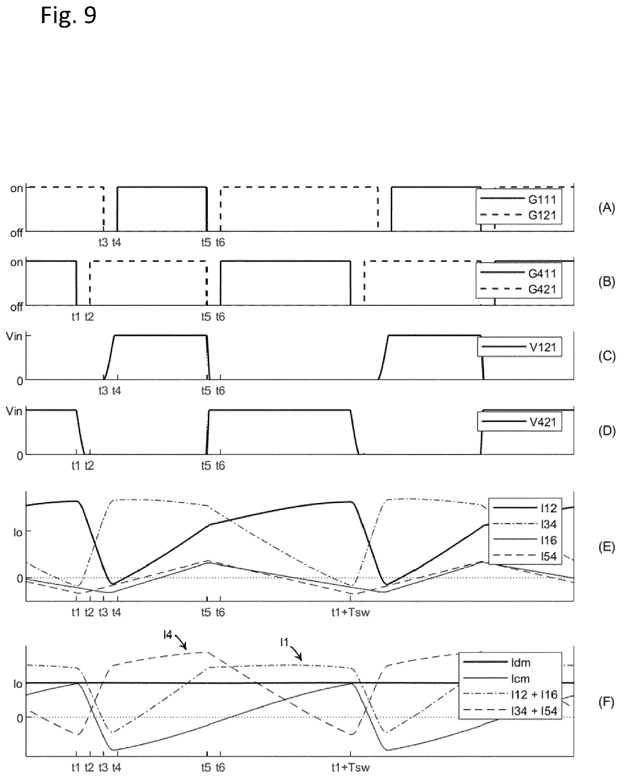

The modulation at a high output load will now be described in conjunction with Fig. 9. In this case, zero-voltage is ensured for all turn-on transitions of the converter resulting in permanent soft-switching and in minimized switching loss. This is achieved by current shaping and the introduction of equal amounts of phase-shift and offset of the modulation zero-sequence. The high frequency components of the inductor currents are no longer identical as will now be explained.

The control signals G111 and G421 on the gates of the first field transistor 111 and the fourth FET 421 as well as the control signals G121 and G411 on the gates of the second FET 121 and the third FET 411 are not identical as is shown lines (A) and (B). The turn-off of the control signals G111 and G421 are aligned at time t5 and the turn-on of G121 and G411 are aligned at time t6. The transitions at the times t3 and t4 are misaligned with respect to the transitions at the times t1 and t2. In practice, this is achieved with the introduction in the pulse-width-modulation of equal amounts (measured in time difference) of phase-shift (see Fig.7A) and zero-sequence offset (see Fig. 7B) as discussed previously. The effects of the phase-shift and the zero-sequence offset add up for transitions at the times t1, t2, t3 and t4 (misaligned) and cancel out for the transitions at the t5 and t6 (aligned).

The average value of the current $I_{16}$ through the second inductor 16 and of the current $I_{54}$ through the third inductor 54 remains zero. The average value of the current $I_{12}$ through the first inductor 12 and of the current $I_{34}$ through the fourth inductor 34 remains equal to the output current (see line (E)). The so-called common-mode current $I_{cm}$ is no longer zero (see line (F)) causing a change in the shape of the currents in the inductors 12, 16, 34, 54 (see line (E)) and in the shape of the current $I_1$ (=$I_{12}$+$I_{16}$) at the node 1 and current $I_4$ (=$I_{34}$+$I_{54}$) at the node 4 (see line (F)). The common-mode current $I_{cm}$ is a direct result of the misalignment of the control signals.

The timing diagram of Fig. 9 reflects the operation of the embodiment of Fig. 2 with coupling of the inductors 12 and 34 (as seen in Fig. 4A) meaning that the majority of the common-mode current $I_{cm}$ flows through the inductors 12 and 34 and the predominant effect of current shaping will be the change of the shape of currents $I_{12}$ and $I_{34}$ as discussed before (see line (E)).

At time t1, a positive value of the common-mode current $I_{cm}$ causes an increase in the current $I_1$ at the node 1 and a decrease of same value in the current $I_4$ at the node 4, effectively "shifting" the current from the circuit in the right-hand side of Fig. 2 to the circuit in the left-hand side of the power converter. This shifting ensures sufficiently negative current in the node 4 for the resonant transition of V421 between t1 and t2 (see line (D)) and for the zero-voltage turn-on of the FET 421 at time t2. This enables the recovery of stored energy in the capacitors 410 and 420 and prevents the reverse recovery of the diode 412 at the time t2 and minimizes the switching loss. At time t3, a negative value of the common-mode current $I_{cm}$ causes a decrease in the current $I_1$ at the node 1 and an increase of same value in the current $I_4$ at the node 4 ensuring sufficiently negative current in the node 1 for the resonant transition of V121 between t3 and t4 (see line (C)), for recovery of stored energy in the capacitors 110 and 120 and for the zero-voltage turn-on of the FET 111 at t4. This enables the recovery of stored energy in capacitors 110 and 120 and prevents the reverse recovery of the diode 122 at the time t2 and minimizes the switching loss.

The effect of current shaping is best appreciated in direct comparison with Fig. 6C which represents the operation at high output load but without current shaping. In Fig. 6C the output current Io has the same value as in Fig. 9, but the current ripple is not sufficient to ensure current reversal (to negative values) at nodes 1 and 4 (see Fig. 6C line (F)). The turn-off of the FETs 111 and 421 and the turn-on of the FETs 121 and 411 are already soft-switched (see times t3 and t4 in Fig. 6C) because the current at the nodes 1 and 4 is sufficiently positive and no introduction of misalignment is required at these events (note that the times t3 and t4 of Fig. 6C are the same as the instants t5 and t6 of Fig. 9). However, the turn-on of FETs 111 and 421 is hard-switched (at time t2 of Fig. 6C) without the introduction of current shaping. The introduction of current shaping in Fig. 9 with common-mode current internal circulation shifts the balance of current at node 1 to ensure a soft-switched transition at time t2 and quickly inverts the balance of current between the times t1 and t4 to ensure a soft-switched transition at time t4. The misalignment of the turn-on of FETs 111 and 421 allows for these to be soft-switched in turn (first one and then the other).

In Fig. 9 lines (A) and (B), the transitions of the gate control signals G411 and G421 at the times t1 and t2 are advanced and the transitions of the gate control signals G121 and G111 at t3 and t4 are delayed. It is not important, for the purpose of soft-switching, which transitions occur first and the events at the times t3 and t4 could switch instants with the events at times t1 and t2. If the output current were negative (instead of positive as in Fig. 9) the transitions to be addressed would be the turn-on of the FETs 121 and 411 and the misalignment of the gate control signals would happen around these instants but the operation is otherwise equivalent. A more detailed description of each event and transition of Fig. 9 follows below.

It can be seen in Fig. 9 that, prior to time t1, the gate control signals G121 and G411 are high and thus the current flows through the second FET 121 (lower left in Fig. 2) and the third FET (upper right in Fig. 2). The gate control signals G111 and G421 are low and there is no current flowing through the first FET 111 and the fourth FET 421. The voltage V12 across the first inductor 12 and the voltage V16 across the second inductor 16 are substantially the same and equal to the symmetric (inverse polarity) of voltage V220 across capacitor 220. The voltage V34 across the third inductor 34 and the voltage V54 across the fourth inductor 54 are substantially the same and equal to the symmetric (inverse polarity) of voltage V310 across capacitor 310. The voltage across all of the inductors 12, 16, 34 and 54 is negative and the currents $I_{16}$ and $I_{54}$ are decreasing. Because of the zero-sequence offset (negative in Fig. 9) the voltage at nodes 2 and 3 is shifted down and the voltage V220 across the capacitor 220 is lower than the voltage V310 across capacitor 310.

As is known with the coupled inductors and high-frequency transformers, the overall negative voltage applied to both of the inductors 12 and 34 causes the average of the currents 12 and 34 to fall due to magnetizing currents (see line (E)) but the difference in the voltages applied to both windings causes an increase in current in the winding of greater voltage (in this case in the inductor 12) relative to a decrease in current in the winding of least voltage (i.e. the inductor 34). For the given amount of current shaping in Fig. 9 (and adding the effects of magnetizing currents) this causes the current $I_{12}$ to increase and the current $I_{34}$ to decrease at a steeper rate. In other words, analyzing from the perspective of common-mode emissions, the common-mode voltage out of the nodes 1 and 4 is half of the input voltage (Vin/2) and the common-mode voltage of nodes 2 and 3 is less than this value due to the negative zero-sequence offset in the pulse-width-modulation. This causes the common-mode current $I_{cm}$ that flows towards the center of the power converter to increase (as shown in line (F)), leading to an increase in current $I_{12}$ (in the same direction as $I_{cm}$) and a faster decrease of current $I_{34}$ (in the inverse direction of $I_{cm}$).

At the time t1, the third FET 411 is turned off (as can be seen in line (B)). During the dead time between t1 and t2, both the third FET 411 and the fourth FET 421 remain switched off. The current $I_4$ at the node 4 is the sum of the currents $I_{34}$ and $I_{54}$, is negative (see line F) and is flowing from the right-hand side of Fig. 2 to the left-hand side of Fig. 2. The current $I_4$ cannot flow through the diodes 412 and 422 or through the FETs 411 and 421 and therefore flows through the capacitors 410 and 420. This current charges the capacitor 410 and discharges capacitor 420 and a transition occurs in which the voltage across the fourth FET 421 falls to zero from the input voltage $V_{in}$ (shown in line (D)). This is a zero-current turn-off transition as before (for the low load case) and little switching loss incurs. After the end of the voltage transition that follows the time t1, the diode 422 becomes forward biased and the current at the node 4 flows through the diode 422 and the voltage of the diode 422 and the fourth FET 421 become substantially zero.

At time t2, the fourth FET 421 is switched on and the current $I_4$ starts flowing through the fourth FET 421. Since the voltage V421 of the fourth FET 421 was already substantially zero (see line (D)), no voltage transition occurs, and the transition is a ZVS turn-on transition and the switching energy loss is minimized.

Before the time t3 (and after the end of the voltage transition following the time t1), the current is flowing through the lower switching elements 125 and 425 (either through the diodes 122 and 422 or through the FETs 121 and 421) and both the nodes 1 and 4 are clamped to the lower supply line 1002. The voltage V34 across the third inductor 34 and the voltage V54 across the fourth inductor 54 are substantially the same and equal to the voltage V320 across the capacitor 320 and have a positive value. The voltage V12 across the first inductor 12 and the voltage V16 across the second inductor 16 are still negative and equal to the symmetric (inverse polarity) of the voltage V220 across the capacitor 220. The differential of the voltage V34 across the inductor 34 and the voltage V12 across the inductor 12 is positive and large (in the order of magnitude of the input voltage Vin) and, due to the coupling of the inductors 12 and 34, causes a fast increase of the current $I_{34}$ and a decrease of the current $I_{12}$ with the same (symmetric) rate of change. In other words, analyzing from the perspective of common-mode emissions, the common-mode voltage out of the nodes 1 and 4 is zero (see lines (C) and (D)) and the common-mode voltage at the nodes 2 and 3 is close to half the input voltage Vin (disregarding the small zero-sequence offset). This causes the common-mode current $I_{cm}$ to decrease quickly (see line (F)), leading also to a decrease in current $I_{12}$ (in the same direction as $I_{cm}$) and an increase of the current $I_{34}$ with an equal rate of change. The average of currents $I_{12}$ and $I_{34}$ remains constant.

At time t3, the second FET 121 is turned off (as can be seen in line (A)). During the dead time between t3 and t4, both the first FET 111 and the second FET 121 remain switched off. The current $I_1$ at the node 1 is the sum of the currents $I_{12}$ and $I_{16}$, is negative at time t3 (see line (F)) and is flowing from the right-hand side of Fig. 2 to the left-hand side of Fig. 2 (after the common-mode decrease leading to time t3, the currents $I_1$ and $I_4$ have approximately swapped values). The current $I_1$ cannot flow through the diodes 112 and 122 or through the FETs 111 and 121 and therefore flows through the capacitors 110 and 120. This current charges the capacitor 120 and discharges the capacitor 110 and a transition occurs in which the voltage across the second FET 121 rises to the input voltage $V_{in}$ from zero which is shown in line (C). This is a zero-current turn-off transition as before (for the low load case) and little switching loss incurs. After the end of the voltage transition that follows time t3, the diode 112 becomes forward biased and the current at the node 1 flows through the diode 112 and the voltage of the diode 112 and the first FET 111 become substantially zero.

At time t4, the first FET 111 is switched on and the current $I_1$ starts flowing through the first FET 111. Since the voltage V111 of the fourth FET 111 was already substantially zero (note that the complementary voltage V121 is equal to the input voltage Vin in line (D)), no voltage transition occurs and the transition is a ZVS turn-on transition and the switching energy loss is minimized.

After the end of the voltage transition following time t3 and up to the new cycle at t1+Tsw, the common-mode voltage at the nodes 1 and 4 is half of the input voltage $V_{in}/2$ and slightly more than the common-mode voltage $V_{cm}$ at the nodes 2 and 3 due to the negative zero-sequence offset in the pulse-width-modulation (as before t1). This leads to a continuous increase of the common-mode current $I_{cm}$ up to its original value at the time t1. Because the transitions at the times t5 and t6 are complementary and the voltage V421 rises when the voltage V121 falls (see lines (C) and (D)), the common-mode voltage $V_{cm}$ remains substantially constant and equal to half of the input voltage $V_{in}/2$ and the rate of increase of common-mode current $I_{cm}$ is also constant leading up to the new cycle at t1+Tsw (see line (F)).

At the time t5, the gate control signals G111 and G421 are lowered (see lines (A) and (B)) and the second FET 111 and the third FET 421 are turned off. During the dead time between the times t5 and t6, all of the first FET 111, the second FET 121, the third FET 411 and the fourth FET 421 remain switched off (as can be seen in lines (A) and (B)). The current $I_1$ at the node 1 and the current $I_4$ at the node 4 have become positive, closer in value and are at or close to their peak value. The currents in all of the inductors 12, 16, 34 and 54 is positive and flows from the circuit of Fig. 2 on the left-hand side to the circuit on the right-hand side.

Immediately after the time t5, a turn-off transition occurs in close similarity to the time t3 of Fig. 6A for the low-load operation case. The current cannot flow through any of the FETs 111, 121, 411 and 421 and therefore flows through the capacitors 110, 120, 410, 420. The capacitors 110 and 420 will be charged up whereas the capacitors 120 and 410 will be discharged. After a voltage transition, the voltage across the diodes 122, 412 becomes substantially zero and current will start to flow through the diodes 122, 412. The voltage across FETs 121 and 411 becomes also substantially zero. As the current is flowing through the capacitors 110, 120, 410, 420 in this transition, this is a zero-current transition as with the times t1 and t3 of Fig. 9. It will be noted that the maximum value (amplitude) of the current $I_1$ and $I_4$ at the nodes 1 and 4 at the time t5 is larger than the value (in amplitude) of the negative current at the times t1 or t3. As a result, the transition is much faster. Since the currents $I_1$ and $I_4$ are also close in value, the transitions of nodes 1 and 4 occur at a similar rate (see lines (C) and (D)).

At time t6, the gate control signals G121 and G411 are raised and the FETs 121 and 411 are switched on. The current starts flowing through the FETs 121 and 411. Since the voltage of the FETs 121, 411 was already substantially zero, this is also a ZVS turn-on transition.

After the time t6 and up to the new cycle at t1+Tsw the conditions are as before the time t1 and the currents reset, and a new cycle begins.

It will be appreciated that the coupling of inductors shown in Fig. 4 is required for the reduction of common-mode inductance and to enable the introduction of sufficient common-mode currents. The circuit allows the adjustment of the timing of transitions in the pulse-width modulation (with small amounts of phase-shift and zero-sequence offset) to specify the amount and shape of the internal common-mode current emissions. The common-mode current enables shaping of the current at the inductors and the switching nodes to ensure sequential zero-voltage transitions of all FETs in the converter minimizing switching energy loss.

The operation of the ripple steering for differential-mode noise emissions occurs regardless of the imposed common-mode currents and the differential-mode output current $I_{dm}$ remains clear of high-frequency emissions in any operation mode (see Fig. 6A line F and Fig. 9 line F).

The common-mode current $I_{cm}$ is circulated internally through the bypass capacitors 200, 300 preventing the progression of the common-mode current $I_{cm}$ to the output terminals. Because these bypass capacitors 200, 300 are internal and connected to the upper supply line 1001 and the lower supply line 1002 and not to earth, the value of the bypass capacitors 200, 300 is not restricted by the limits of the earth current, making it easy to filter the added common-mode emissions.

Any filters can be easily designed to remove the effects of the added common mode current. These filters are usually comprised of a common-mode choke that can have high values of common-mode inductance and Y-capacitors between the outmost terminals and earth. Since most of the common-mode and differential-mode emissions are contained inside the power converter (with resource to the bypass capacitors 200 and 300 and the ripple steering) this common-mode choke can have a lossy core and is of simple construction. The leakage inductance of the common-mode choke can also be used in conjunction with an X-capacitor (between the terminals of the outmost terminals of the choke) to implement an additional stage of differential-mode filtering and achieve higher attenuation.

As set out above, the power converter described in this document provides a means of achieving zero-voltage and zero-current transitions and minimal switching losses without the need to adjust the frequency of the gate control signals. This means that the values of the components in the circuit and of the controller gains can be chosen to ensure the required output performance and there is no need to take into account their operation at different frequencies. It also means that the frequency is an additional degree of freedom in the design of the power converter that can be adjusted independently to further improve the overall performance.

The power converter described in this document needs not operate under soft-switching and can limit or extend the imposed value of common-mode currents to reduce the stress on individual components or to the maximize conversion efficiency (instead of just reducing the losses in the FETs).

The power converter can be run as a voltage source or as a current controlled device and the ripple steering internal filter and the current shaping have little interference in the operation of the internal voltage or current control loops.

The DC-DC embodiment can be adapted to AC-AC conversion by simple adoption of bidirectional switches. The power converter can operate under full range of reactive power and with bidirectional power flow in any of its AC-DC or DC-DC or AC-AC configurations.

In one further aspect of the power converter, it is possible to remove up to two of the bypass capacitors 210, 220, 310 and 320 in order to reduce the number of components, provided that at least one bypass capacitor 210, 220, 310 and 320 remains for each output terminal 2 and 3, although it will be appreciated that this leads to worse EMI attenuation. The balanced design presented in Fig. 2 enables distribution of capacitor losses, for reduced ringing in the FETs and for increased reliability (two or three capacitors out of 210, 220, 310, 320 must fail for the converter to be in a critical failure).

Applications of the power converter include but are not limited to electric vehicles battery chargers, stationary battery chargers, photovoltaic panel inverters, switched-mode-power-supplies, electric motor drives, solid-state transformers and other types of static power conversion. Three configurations of the DC-AC embodiment can be used for six-phase DC-AC conversion applied to six-phase AC transmission systems, six-pole motors drives or three-pole motor drivers where the motor windings are separate (not in delta configuration and do not share a common neutral in a Y configuration).

Acknowledgments: the research leading to this work is being carried out as a part of the InteGrid project, which received funding from the European Union's Horizon 2020 Framework Programme for Research and Innovation under grant agreement No. 731218. The sole responsibility for the content lies with the authors. It does not necessarily reflect the opinion of the Innovation and Networks Executive Agency (INEA) or the European Commission (EC). INEA or the EC are not responsible for any use that may be made of the information it contains.

**Claims**

1. A power converter for converting an input electrical supply at a first voltage to an output electrical supply at a second voltage, the power converter comprising:

   a first pair of switching elements (115, 125) connected in series at a first common node (1) between a first supply line (1001) of an input electrical supply and a third node;
   a second pair of switching elements (415, 425) connected in series at a second common node (4) between a fourth node and a second supply line (1002) of the input electrical supply;
an upper path connected between the first common node (1) and the second common node (4), wherein the upper path comprises a first inductor (12) connected to one side of a first blocking capacitor (25) and a third inductor (54) connected to another side of the first blocking capacitor (25);
a lower path connected between the first common node (1) and the second common node (4), wherein the lower path comprises a second inductor (16) connected to one side of a second blocking capacitor (63) and a fourth inductor (34) connected to another side of the second blocking capacitor (63); and
an output, wherein the output comprises a first output terminal (2) connected to the one side of the first blocking capacitor (25) and a second output terminal (3) connected to the other side of the second blocking capacitor (63).

2. The power converter of claim 1, wherein the third node is connected to the second supply line (1002) and the fourth node is connected to the first supply line (1001).

3. The power converter of claim 1, wherein the third node is connected to the fourth node.

4. The power converter of claim 2 or claim 3, further comprising at least one bypass capacitor (210, 220) connected between the first output terminal (2) and the first supply line (1001) and at least one bypass capacitor (310, 320) connected between the second output terminal (3) and the second supply line (1002).

5. The power converter of any of the above claims, wherein the switching elements in the first pair of switching elements (115, 125) and the second pair of switching elements (415, 425) each comprise a field effect transistor (111, 121, 411, 421), a capacitor (110, 120, 410, 420) and a diode (112, 122, 412, 422) arranged in parallel.

6. The power converter of any of the above claims, wherein at least one of the inductors of the first inductor (12) and the second inductor (16) is coupled with at least one of the inductors of the third inductor (54) and the fourth inductor (34).

7. The power converter of any of the above claims, further comprising a controller for applying a switching signal at a switching frequency to the switching elements (115, 125, 415, 425).

8. The power converter of claim 7, wherein the second inductor (16) and the second blocking capacitor (63) or the third inductor (54) and the first blocking capacitor (25) form a resonant circuit and wherein the resonant frequency of the resonant circuit is lower than the switching frequency.

9. The power converter of any of the above claims, wherein the inductance values of the first inductor (12), the second inductor (16), the third inductor (54) and the fourth inductor (34) are substantially equal.

10. A method for operating the power converter of one of claims 1 to 9 for converting an input electrical supply at a first voltage to an output electrical supply at a second voltage, the method comprising:

- cyclically switching on a top switching element (115) in the first pair of switching elements (115, 125) and a bottom switching element (425) in the second pair of switching elements (415, 425); and

cyclically switching on a bottom switching element (125) in the first pair of switching elements (115, 125) and a top switching element (415) in the second pair of switching elements (415, 425); wherein
in the first pair of switching elements (115, 125) the top switching element (115) is never switched on concurrently with the bottom switching element (125) and in the second pair of switching elements (415, 425) the top switching element (415) is never switched on concurrently with the bottom switching element (425).

11. The method of claim 10, further comprising:

- switching off the bottom switching element (125) of the first pair of switching elements (115, 125) at a first time instant before switching off the top switching element (415) of the second pair of switching elements (415, 425) at a second time instant if the output current is flowing from the first output terminal (2) to the second output terminal (3);

otherwise

- switching off the top switching element (115) of the first pair of switching elements (115, 125) at a first time instant before switching off the bottom switching element (425) of the second pair of switching elements (415, 425) at a second time instant if the output current is flowing from the second output terminal (3) to the first output terminal (2);

12. The method of claim 10, further comprising:

- switching off the bottom switching element (125) of the first pair of switching elements (115, 125) at a second time instant after switching off the top switching element (415) of the second pair of switching elements (415, 425) at a first time instant if the output current is flowing from the first output terminal (2) to the second output terminal (3);

otherwise

- switching off the top switching element (115) of the first pair of switching elements (115, 125) at a second time instant after switching off the bottom switching element (425) of the second pair of switching elements (415, 425) at a first time instant if the output current is flowing from the second output terminal (3) to the first output terminal (2);

13. The method of claim 11 or claim 12, wherein the time delay between the first time instant and the second time instant is sufficient for the sum of the currents flowing through the first inductor (12) and the second inductor (16) and the sum of the currents flowing through the third inductor (54) and the fourth inductor (34) to change directions and achieve a minimum predetermined value.

14. The method of claim 13, further comprising switching on one or more of the first switching element (115), the second switching element (125), the third switching element (415) or the fourth switching element (425) after the voltage across the one or more of the first switching element (115), the second switching element (125), the third switching element (415) or the fourth switching element (425) becomes substantially zero.

## Fig. 1A

## Fig. 1B

## Fig. 2

## Fig. 3

# Fig. 4

(A)　　　　　　　(B)　　　　　　　(C)

# Fig. 5

## Fig. 6A

Fig. 6B

Fig. 6C

Fig. 7A

Fig. 7B

# Fig. 8

—··—··—>    Idm: differential-mode output current (noise free)

------->    Ir:    ripple current noise emissions (steered)

················>    Icm: common-mode internal current (for current shaping)

Fig. 9

Europäisches
Patentamt

European
Patent Office

Office européen
des brevets

# EUROPEAN SEARCH REPORT

Application Number

EP 20 16 1436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 875 103 A (BHAGWAT PRADEEP MADHAY [US] ET AL) 23 February 1999 (1999-02-23) * abstract * * column 1, lines 7-12 * * column 12, lines 49-56; figure 9 * ----- | 1-14 | INV. H02M1/00 H02M3/158 H02M7/5387 H02M7/48  ADD. H02M1/44 |

TECHNICAL FIELDS
SEARCHED      (IPC)

H02M

The present search report has been drawn up for all claims

| Place of search | Date of completion of the search | Examiner |
|---|---|---|
| The Hague | 30 July 2020 | Van der Meer, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................
& : member of the same patent family, corresponding
    document

EPO FORM 1503 03.82 (P04C01)

**EP 3 876 404 A1**

## ANNEX TO THE EUROPEAN SEARCH REPORT
## ON EUROPEAN PATENT APPLICATION NO.

EP 20 16 1436

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2020

| Patent document cited in search report | Publication date | Patent family member(s) | Publication date |
|---|---|---|---|
| US 5875103 A | 23-02-1999 | NONE | |

EPO FORM P0459

For more details about this annex : see Official Journal of the European Patent Office, No. 12/82

29

# EP 3 876 404 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **C. P. HENZE ; H. C. MARTIN ; D. W. PARSLEY.** Zero-voltage switching in high frequency power converters using pulse width modulation. *APEC '88 ThirdAnnual IEEE AppliedPower Electronics Conference and Exposition,* 33-40
- **C. MARXGUT ; J. BIELA ; J. W. KOLAR.** Interleaved Triangular Current Mode (TCM) resonant transition, single phase PFC rectifier with high efficiency and high power density. *The 2010 International Power Electronics Conference-ECCE ASIA,* 2010, 1725-1732
- **D. BORTIS ; D. NEUMAYR ; J. W. KOLAR.** $\eta\rho$-Pareto optimization and comparative evaluation of inverter concepts considered for the GOOGLE Little Box Challenge. *IEEE 17th Workshop on Control and Modeling for Power Electronics (COMPEL),* 2016, 1-5
- **ROTHMUND, T. GUILLOD ; D. BORTIS ; J. W. KOLAR.** 99.1% Efficient 10 kV SiC-Based Medium-Voltage ZVS Bidirectional Single-Phase PFC AC/DC Stage. *IEEE J. Emerg. Sel. Top. Power Electron.,* June 2019, vol. 7 (2), 779-797